# FASCICULE DE BREVET EUROPEEN

(11) **EP 3 131 746 B1**
(45) Date de publication et mention de la délivrance du brevet: **22.08.2018**
(21) Numéro de dépôt: 15719260.0
(22) Date de dépôt: 07.04.2015
(51) Int. Cl.: B32B 3/06, B32B 3/12, B29C 65/00, F16B 3/00, F16B 5/01, F16B 5/07

(54) **PIÈCE POLYGONALE À ALVÉOLES POUR UNE ÂME DE PANNEAU, EN PARTICULIER DE RÉFLECTEUR D'ANTENNE DE SATELLITE**
POLYGONALES TEIL MIT HOHLRÄUMEN FÜR EINEN PANEELKERN, INSBESONDERE EINES SATELLITENANTENNENREFLEKTORS
POLYGONAL PART HAVING CAVITIES FOR A PANEL CORE, IN PARTICULAR OF A SATELLITE ANTENNA REFLECTOR

(30) Priorité: 14.04.2014 FR 1400890
(43) Date de publication de la demande: 22.02.2017
(73) Titulaire: ArianeGroup SAS, 75015 Paris (FR)
(72) Inventeur: COÏC, Jean-Sébastien, 78510 Triel sur Seine (FR); BAUDRY, Pierre, 33700 Merignac (FR)
(74) Mandataire: Gevers & Orès
(86) Numéro de dépôt international: PCT/FR2015/000074
(87) Numéro de publication internationale: WO 2015/158966

(56) Documents cités:
- EP-A1- 2 407 303
- WO-A1-2005/013421
- WO-A1-2007/002442
- WO-A1-2008/148537
- US-A1- 2014 064 833

## Description

La présente invention concerne une pièce de forme polygonale à alvéoles pour une âme de panneau, en particulier de réflecteur d'antenne de satellite.

Bien que non exclusivement, la présente invention s'applique plus particulièrement à une structure d'un réflecteur d'antenne de satellite de télécommunication, en particulier d'un réflecteur d'antenne de grande dimension. Un tel réflecteur d'antenne comprend, généralement, une structure ou panneau rigide (appelé coque) pourvue d'une surface réfléchissante et des moyens de renfort à l'arrière de cette surface, qui participent au maintien de la coque et à la liaison avec le satellite.

On sait que les coques de réflecteurs de satellite sont, en général, constituées d'une structure sandwich composite comprenant une âme en nid-d'abeilles (structurale et transparente aux ondes radioélectriques) renforcée par deux peaux pré-imprégnées de fibres de carbone et de résine. L'âme en nid-d'abeilles (ou âme NIDA) permet de renforcer la résistance de la coque tout en garantissant une légèreté maximale.

Lors de la fabrication de la coque, l'âme NIDA, qui présente par exemple un diamètre de l'ordre de deux à trois mètres, est réalisée manuellement par un opérateur, en assemblant ensemble une pluralité de pièces hexagonales de type NIDA, dont les dimensions varient généralement suivant le profil de la coque. Ces pièces hexagonales comprennent des alvéoles de forme hexagonale. L'assemblage des différentes pièces est réalisé en ouvrant les cellules (ou alvéoles) périphériques, et en imbriquant les cellules ouvertes de deux pièces adjacentes devant être assemblées ensemble.

Un assemblage manuel des pièces hexagonales comprenant des alvéoles de forme hexagonale, suppose donc notamment :
- une ouverture manuelle par un opérateur des cellules ou alvéoles périphériques des pièces ; et
- une imbrication manuelle par l'opérateur des alvéoles ouvertes de deux pièces adjacentes.

En raison du nombre élevé de pièces et de la taille réduite des alvéoles (à ouvrir et à imbriquer), un tel assemblage est long, et il nécessite un effort important pour l'opérateur, générant notamment une fatigue visuelle importante.

La présente invention a pour objet de remédier à cet inconvénient. Elle concerne une pièce destinée à une âme de panneau, en particulier pour un réflecteur d'antenne de satellite, ladite pièce étant sensiblement plane et présentant une forme polygonale à alvéoles.

Selon l'invention, chaque côté de la pièce de forme polygonale comporte au moins l'un des éléments d'assemblage suivants : au moins un tenon, au moins un évidement, chacun desdits tenons et chacun desdits évidements de la pièce présentent des formes de trapèze, respectivement de formes complémentaires, le trapèze de chacun desdits tenons s'élargissant vers l'extérieur de la pièce et le trapèze de chacun desdits évidements s'élargissant vers l'intérieur de la pièce, et chacun desdits tenons présente une largeur définie transversalement à une médiatrice du trapèze correspondant, qui est supérieure ou égale à la largeur de chacun desdits évidements.

Ainsi, grâce à l'agencement de tenons et d'évidements complémentaires sur les pièces, on est en mesure de réaliser un assemblage manuel facile et rapide des pièces, sans ouverture d'alvéoles, comme précisé ci-dessous. On obtient ainsi notamment un gain très important en termes de coût et de temps d'assemblage, comme également précisé ci-après.

De préférence :
- les différents tenons de la pièce sont identiques, et les différents évidements de la pièce sont également identiques ; et
- chacun desdits tenons et chacun desdits évidements de la pièce présentent une forme de trapèze isocèle.

De façon usuelle, un trapèze est un quadrilatère, possédant deux côtés opposés parallèles, appelés bases, et un trapèze isocèle est tel que les deux bases du trapèze ont une même médiatrice, qui est un axe de symétrie du trapèze.

Par ailleurs, ladite pièce présente au moins certaines des caractéristiques suivantes, prises individuellement ou en combinaison :
- la largeur desdits tenons est comprise dans un domaine de largeurs défini entre 100% et 150% de la largeur desdits évidements ;
- lesdits tenons présentent une longueur définie le long d'une médiatrice du trapèze correspondant, qui est inférieure ou égale à la longueur desdits évidements ;
- chaque côté de la pièce comporte au moins deux éléments d'assemblage, de préférence au moins deux tenons identiques ou au moins deux évidements identiques. Avantageusement, chaque côté de la pièce comporte de mêmes éléments d'assemblage (à savoir soit des tenons, soit des évidements) ; et
- la pièce présente une forme générale hexagonale.

La présente invention concerne également :
- une âme de panneau comprenant une pluralité de pièces telles que celle précitée, qui sont assemblées ensemble ;
- un réflecteur d'antenne de satellite, comprenant une telle âme (de panneau) et deux peaux agencées de part et d'autre de l'âme ; et
- un satellite, comportant un tel réflecteur d'antenne.

La présente invention concerne, en outre, un procédé de fabrication d'une âme de panneau, en particulier pour un réflecteur d'antenne de satellite, à l'aide de pièces d'âme telles que la pièce précitée, ledit procédé consistant au moins :
a) à réaliser une pluralité de pièces d'âme ; et
b) à assembler ensemble lesdites pièces d'âme de manière à former un élément de structure représentant ladite âme de panneau, l'assemblage consistant à lier ensemble des pièces d'âme adjacentes au niveau de côtés coopérants.

Selon l'invention, à l'étape b), pour chaque couple de côtés coopérants de deux pièces d'âme adjacentes, on insère l'ensemble des tenons du côté d'une desdites pièces dans l'ensemble des évidements de forme complémentaire du côté coopérant de l'autre desdites pièces.

Ce mode d'assemblage du procédé de fabrication permet d'obtenir des gains économiques par rapport à un procédé d'assemblage usuel nécessitant une ouverture des alvéoles. Il permet notamment de réduire le temps d'assemblage. En parallèle, il permet de réduire l'effort sur le poste de travail et a un impact positif sur l'ergonomie du poste de travail : fatigue visuelle diminuée par simplification de l'imbrication.

Les figures du dessin annexé feront bien comprendre comment l'invention peut être réalisée. Sur ces figures, des références identiques désignent des éléments semblables.
La figure 1 est une vue schématique en plan d'une pièce hexagonale à alvéoles illustrant l'invention.
La figure 2 est une vue schématique similaire à celle de la figure 1, sans alvéoles pour bien mettre en évidence des caractéristiques de la pièce.
Les figures 3 et 4 sont des vues en coupe, respectivement d'un tenon et d'un évidement, d'une pièce polygonale.
La figure 5 est une vue schématique, en plan, d'une âme de structure formée d'une pluralité de pièces telles que celle représentée sur la figure 2.
La figure 6 est une vue schématique, en perspective, d'une structure sandwich comprenant une âme telle que celle représentée sur la figure 5.
La figure 7 illustre schématiquement un assemblage de deux pièces.

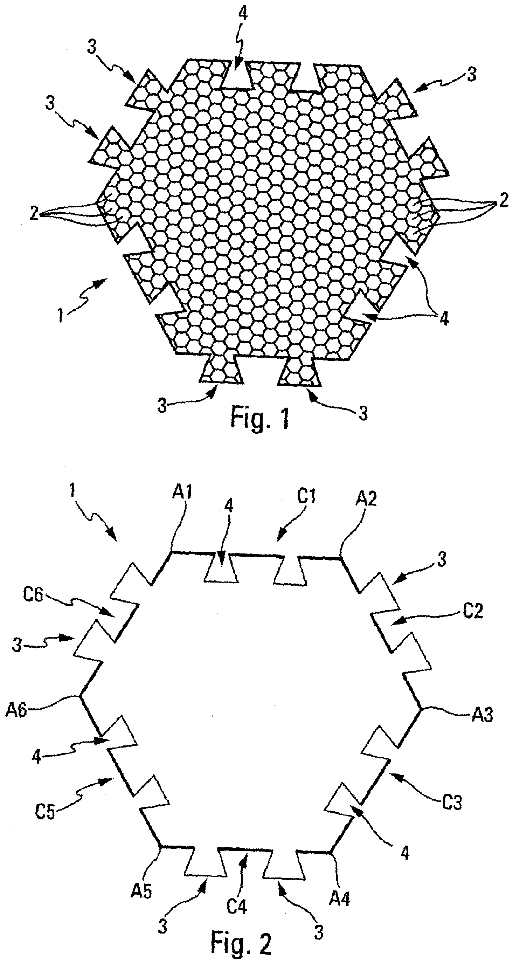

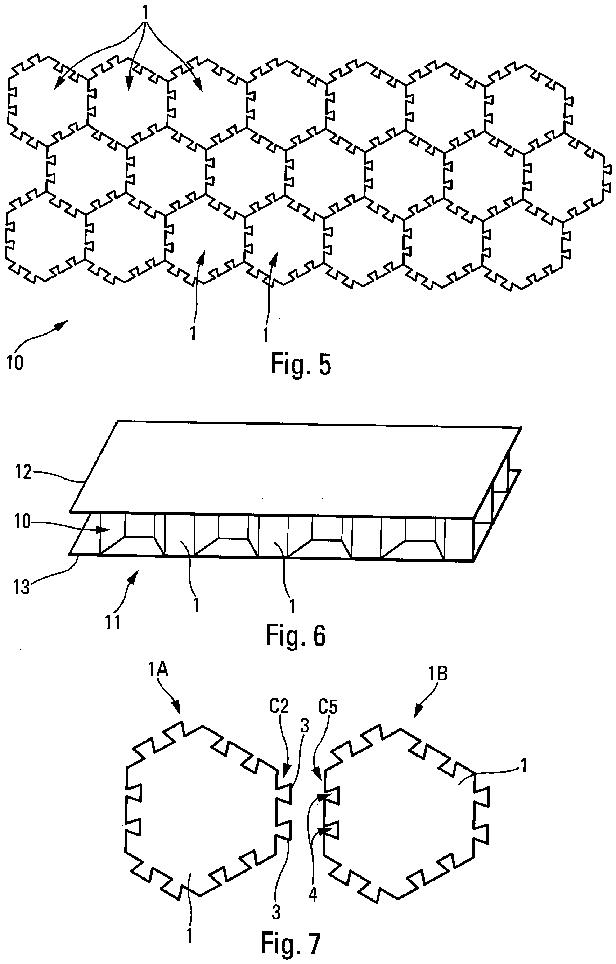

La pièce 1, illustrant l'invention et représentée schématiquement sur la figure 1 notamment, est une pièce d'âme destinée à être utilisée pour former une âme de panneau 10 (figure 5), en particulier pour un réflecteur d'antenne de satellite, comme précisé ci-dessous.

Cette pièce 1 est sensiblement plane et présente une forme générale polygonale, en l'occurrence une forme générale hexagonale de côtés C1 à C6 définies, respectivement, entre des sommets A1 à A6, comme représenté sur la figure 2. Cette pièce 1 est réalisée en un matériau présentant une certaine flexibilité.

Cette pièce 1 comporte une structure NIDA (c'est-à-dire en nid-d'abeilles) pourvue d'une pluralité d'alvéoles 2 de forme hexagonale. Ces alvéoles hexagonales, bien que toujours présentes dans la pièce 1, n'ont pas été représentées sur les exemples des figures 2, 5 et 7 pour ne pas surcharger ces figures.

Chaque côté C1 à C6 de la pièce 1 de forme polygonale comporte au moins l'un des éléments d'assemblage suivants : au moins un tenon 3, au moins un évidement 4. Chacun desdits tenons 3 et chacun desdits évidements 4 de la pièce 1 sont réalisés sous forme de trapèzes, de formes respectivement complémentaires.

Dans le cadre de la présente invention, on entend par formes complémentaires le fait que les tenons 3 et les évidements 4 présentent des formes respectives permettant d'insérer un tenon 3 d'une pièce dans un évidement 4 d'une autre pièce.

En plus, de la forme complémentaire, les emplacements des tenons 3 et évidements 4 sur la pièce 1 sont également complémentaires pour pouvoir réaliser un assemblage permettant de former une âme de panneau 10 telle que celle représentée sur la figure 5. Il en est de même de leurs tailles pour obtenir un maintien du tenon 3 dans l'évidement 4, comme précisé ci-dessous.

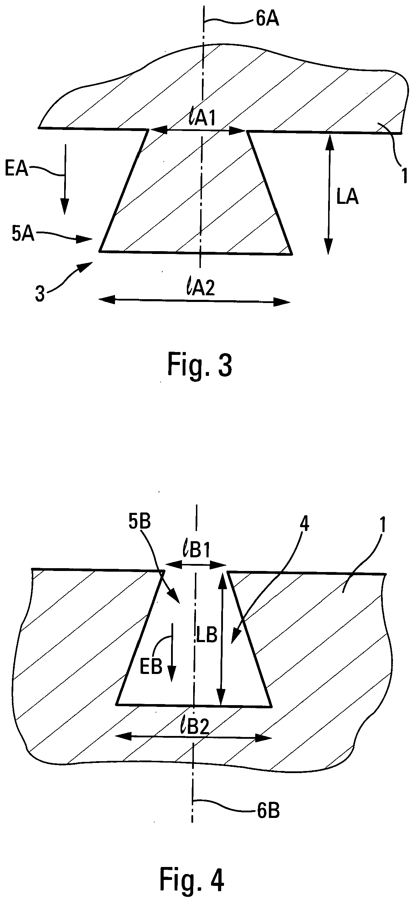

Chaque trapèze 5A d'un tenon 3 s'élargit vers l'extérieur de la pièce 1, selon un sens EA, comme représenté sur la figure 3. De plus, chaque trapèze 5B d'un évidement 4 s'élargit vers l'intérieur de la pièce, selon un sens EB, comme représenté sur la figure 4.

En outre :
- les différents tenons 3 de la pièce 1 sont tous identiques, et les différents évidements 4 de la pièce 1 sont également tous identiques ; et
- chacun desdits tenons 3 et chacun desdits évidements 4 de la pièce présentent une forme de trapèze 5A, 5B isocèle.

De façon usuelle, un trapèze est un quadrilatère, possédant deux côtés opposés parallèles, appelés bases, et un trapèze isocèle 5A, 5B est tel que les deux bases du trapèze 5A, 5B ont une même médiatrice 6A, 6B, qui est un axe de symétrie du trapèze 5A, 5B.

Ainsi, grâce à une réalisation de la forme (prédécoupée) de la pièce 1, en tenons 3 et évidements 4 complémentaires (ou en queues d'aronde positives et négatives), on peut réaliser un assemblage manuel facile et rapide de telles pièces 1, en préservant notamment les orientations de la structure NI-DA, sans ouverture des alvéoles 2, comme précisé ci-dessous. On obtient ainsi un gain très important en termes de coût et de temps d'assemblage (et donc de production). On obtient également un gain en termes d'ergonomie de poste et d'en-cours de production.

Comme représenté sur la figure 3, chaque tenon 3 présente une première largeur l1A (taille de la base la plus courte) et une seconde largeur lA2 (taille de la base la plus longue), transversalement à la médiatrice commune 6A (ou axe de symétrie), et une longueur LA le long de l'axe de symétrie 6A.

De façon similaire, comme représenté sur la figure 4, chaque évidement 4 présente une première largeur IB1 (taille de la base la plus courte) et une seconde largeur IB2 (taille de la base la plus longue), transversalement à la médiatrice commune 6B (ou axe de symétrie), et une longueur LB le long de l'axe de symétrie 6B.

Dans un mode de réalisation préféré, la largeur IA1, par exemple 16 mm, est supérieure à la largeur lB1, par exemple 10 mm, et la largeur lA2, par exemple 31 mm, est supérieure à la largeur IB2, par exemple 25 mm, de manière à permettre une stabilité lorsqu'un tenon 3 (plus large) est inséré dans un évidement 4 (moins large). Pour permettre l'insertion, la pièce 1 est réalisée en un matériau présentant une certaine flexibilité.

Dans un mode de réalisation particulier, la largeur des tenons 3 (sur tout le tenon 3 de forme similaire à un évidement 4 le long de l'axe de symétrie) est comprise dans un domaine de largeurs défini entre 100% et 150% de la largeur des évidements 4.

De plus, dans un mode de réalisation préféré, la longueur LA (suivant l'axe de symétrie 6A) d'un tenon 3, par exemple 20 mm, est inférieure à la longueur LB (suivant l'axe de symétrie 6B) d'un évidement 4, par exemple 22 mm, ce qui permet d'éviter des déformations longitudinales (selon l'axe de symétrie) lorsqu'un tenon 3 est inséré dans un évidement 4.

Dans un mode de réalisation particulier, la longueur LA des tenons 3 est comprise dans un domaine de longueurs défini entre 75% et 100% de la longueur LB des évidements 4.

Chaque côté C1 à C6 de la pièce 1 peut comporter un tenon 3 ou un évidement 4. Dans le cadre de la présente invention, il est également envisageable de prévoir sur un même côté Ci (i = 1,..., 6), à la fois au moins un tenon 3 et au moins un évidement 4.

Toutefois, de préférence, en particulier pour des raisons de facilité d'assemblage, chaque côté C1 à C6 de la pièce 1 est pourvu d'un seul type (tenon 3 ou évidement 4) d'élément d'assemblage. Dans ce cas, de préférence, comme représenté sur les figures 1 et 2, les côtés adjacents comprennent alternativement, et successivement autour de la pièce 1, un type d'élément d'assemblage puis un autre et ainsi de suite, à savoir des évidements 4 sur C1, des tenons 3 sur le côté C2, des évidements 4 sur le côté C3, des tenons 3 sur le côté C4, ...

Dans un mode de réalisation préféré, chaque côté C1 à C6 de la pièce 1 comporte une pluralité (deux, trois,...) et de préférence deux tenons 3 identiques ou bien une pluralité (deux, trois,...) et de préférence deux évidements 4 identiques. Deux tenons 3 ou deux évidements 4 par côté C1 à C6 permettent d'obtenir une liaison stable, tout en limitant le nombre d'éléments d'assemblage, ce qui facilite la fabrication de la pièce 1, ainsi que son assemblage.

La présente invention concerne, en outre, un procédé de fabrication à l'aide de pièces d'âme telles que la pièce précitée 1 d'une âme de panneau 10, comme représenté sur la figure 5. Cette âme de panneau 10 est destinée en particulier à un réflecteur d'antenne de satellite. Un tel réflecteur d'antenne comprend, généralement, une structure ou panneau rigide (appelé coque) pourvue d'une surface réfléchissante et des moyens de renfort à l'arrière de cette surface, qui participent au maintien de la coque et à la liaison avec le satellite.

Une telle coque de réflecteur de satellite est, en général, constituée d'une structure sandwich composite 11 comprenant une âme 10 de type NIDA (structurale et transparente aux ondes radioélectriques) renforcée par deux peaux 12 et 13 pré-imprégnées de fibres de carbone/matrice époxy, comme représenté sur la figure 6.

Pour des raisons de simplification du dessin, l'âme 10 et la structure 11 sont représentées sous forme générale rectangulaire sur les figures 5 et 6. Bien entendu, dans le cas d'une coque de réflecteur d'antenne, ces éléments présentent une forme générale circulaire, par exemple avec un diamètre de l'ordre de deux à trois mètres.

Le procédé de fabrication de l'âme 10 comprend notamment les étapes suivantes consistant :
a) à fabriquer, de façon usuelle, une pluralité de pièces 1 telles que la pièce 1 décrite ci-dessus, de préférence en réalisant un découpage dans une structure en nid-d'abeilles ; et
b) pour un opérateur à assembler ensemble manuellement lesdites pièces d'âme de manière à former un élément de structure représentant l'âme 10, l'assemblage consistant à lier ensemble des pièces d'âme adjacentes au niveau de côtés coopérants.

Selon l'invention, à l'étape b), pour chaque couple de côtés coopérants de deux pièces d'âme adjacentes, comme illustré sur la figure 7 pour deux pièces 1 référencées respectivement par 1A et 1B, on insère les tenons 3 par exemple du côté C2 de la pièce 1A dans les évidements 4 de forme complémentaire du côté C5 coopérant de la pièce 1B.

L'étape b) consiste pour un opérateur :
b1) à approcher un tenon 3 de l'évidement 4 coopérant ;
b2) à comprimer le tenon 3 (qui est plus large que l'évidement 4) à l'aide d'une pince ;
b3) à insérer le tenon 3 comprimé dans l'évidement 4 coopérant ; et
b4) à réaliser un ajustage, pour bien positionner les pièces 1A et 1B l'une par rapport à l'autre.

Cette étape b) est mise en oeuvre pour l'ensemble des pièces 1 de l'âme 10.

Ce mode d'assemblage permet d'obtenir des gains économiques par rapport à un procédé d'assemblage usuel nécessitant une ouverture des alvéoles. Il permet notamment de diviser par deux le temps d'assemblage. En parallèle, il permet de réduire l'effort sur le poste de travail et a un impact positif sur l'ergonomie du poste de travail : fatigue visuelle diminuée par simplification de l'imbrication.

La structure 10 en nid-d'abeilles (ou NIDA) permet notamment de renforcer la résistance d'un panneau 11 dans lequel elle est intégrée tout en garantissant une légèreté maximale.

Après on réalise bien entendu des traitements usuels, et notamment une polymérisation, pour obtenir la structure sandwich composite définitive, en particulier une coque de réflecteur de satellite.

## Revendications

1. Pièce destinée à une âme de panneau, en particulier pour un réflecteur d'antenne de satellite, ladite pièce (1) étant sensiblement plane et présentant une forme polygonale à alvéoles, la pièce (1) de forme polygonale comportant au moins l'un des éléments d'assemblage suivants : au moins un tenon (3), au moins un évidement (4),
**caractérisée en ce que** chaque côté (C1 à C6) de la pièce (1) de forme polygonale comporte au moins l'un desdits éléments d'assemblage, **en ce que** chacun desdits tenons (3) et chacun desdits évidements (4) de la pièce (1) présentent des formes de trapèze (5A, 5B), respectivement de formes complémentaires, le trapèze (5A) de chacun desdits tenons (3) s'élargissant vers l'extérieur de la pièce (1) et le trapèze (5B) de chacun desdits évidements (4) s'élargissant vers l'intérieur de la pièce (1), et **en ce que** chacun desdits tenons (3) présente une largeur définie transversalement à une médiatrice (6A) du trapèze (5A) correspondant, qui est supérieure à la largeur de chacun desdits évidements (4).

2. Pièce selon la revendication 1,
**caractérisée en ce que** les différents tenons (3) de la pièce (1) sont identiques, et **en ce que** les différents évidements (4) de la pièce (1) sont également identiques.

3. Pièce selon l'une des revendications 1 et 2,
**caractérisée en ce que** chacun desdits tenons (3) et chacun desdits évidements (4) de la pièce (1) présentent une forme de trapèze isocèle.

4. Pièce selon l'une quelconque des revendications 1 à 3,
**caractérisée en ce que** la largeur desdits tenons (3) est comprise dans un domaine de largeurs défini entre 100% et 150% de la largeur desdits évidements (4).

5. Pièce selon l'une quelconque des revendications précédentes,
**caractérisé en ce que** lesdits tenons (3) présentent une longueur définie le long d'une médiatrice (6A) du trapèze (5A) correspondant, qui est inférieure ou égale à la longueur desdits évidements (4).

6. Pièce selon l'une quelconque des revendications précédentes,
**caractérisée en ce que** chaque côté (C1 à C6) de la pièce (1) comporte au moins deux éléments d'assemblage (3, 4).

7. Pièce selon la revendication 6,
**caractérisée en ce que** chaque côté (C1 à C6) de la pièce (1) comporte de mêmes éléments d'assemblage.

8. Pièce selon l'une quelconque des revendications précédentes, **caractérisée en ce qu'**elle présente une forme générale hexagonale.

9. Âme de panneau comprenant une pluralité de pièces d'âme assemblées ensemble,
**caractérisée en ce que** lesdites pièces d'âme sont telles que la pièce (1) spécifiée sous l'une quelconque des revendications 1 à 8.

10. Réflecteur d'antenne de satellite, comprenant une âme et deux peaux agencées de part et d'autre de l'âme,
**caractérisé en ce que** ladite âme est telle que l'âme de panneau (10) spécifiée sous la revendication 9.

11. Satellite,
**caractérisé en ce qu'**il comporte un réflecteur d'antenne tel que celui spécifié sous la revendication 10.

12. Procédé de fabrication d'une âme de panneau, en particulier pour un réflecteur d'antenne de satellite, à l'aide de pièces d'âme telles que la pièce (1) spécifiée sous l'une quelconque des revendications 1 à 8, ledit procédé consistant au moins :
a) à réaliser une pluralité de pièces d'âme ; et
b) à assembler ensemble lesdites pièces d'âme de manière à former un élément de structure représentant ladite âme de panneau (10), l'assemblage consistant à lier ensemble des pièces d'âme adjacentes au niveau de côtés coopérants,
**caractérisé en ce qu'**à l'étape b), pour chaque couple de côtés coopérants de deux pièces d'âme adjacentes, on insère l'ensemble des tenons (3) du côté d'une desdites pièces dans l'ensemble des évidements (4) de forme complémentaire du côté coopérant de l'autre desdites pièces.

## Patentansprüche

1. Teil, das für einen Kern einer Platte, insbesondere für einen Satellitenantennenreflektor vorgesehen ist, wobei das Teil (1) im Wesentlichen plan ist und eine polygonale Wabenform aufweist, wobei das Teil (1) von polygonaler Form mindestens eines der folgenden Verbindungselemente umfasst: mindestens eine Nase (3), mindestens eine Aussparung (4),
**dadurch gekennzeichnet, dass** jede Seite (C1 bis C6) des Teils (1) von polygonaler Form mindestens eines der Verbindungselemente umfasst, dadurch, dass jede der Nasen (3) und jede der Aussparungen (4) des Teils (1) Trapezformen (5A, 5B) von jeweils komplementären Formen aufweisen, wobei sich das Trapez (5A) jeder der Nasen (3) zur Außenseite des Teils (1) hin verbreitert, und sich das Trapez (5B) jeder der Aussparungen (4) zur Innenseite des Teils (1) hin verbreitert, und dadurch, dass jede der Nasen (3) eine definierte Breite quer zu einer Mittellinie (6A) des entsprechenden Trapezes (5A) aufweist, die größer ist als die Breite jeder der Aussparungen (4).

2. Teil nach Anspruch 1, **dadurch gekennzeichnet, dass** die verschiedenen Nasen (3) des Teils (1) identisch sind, und dadurch, dass die verschiedenen Aussparungen (4) des Teils (1) ebenfalls identisch sind.

3. Teil nach einem der Ansprüche 1 und 2, **dadurch gekennzeichnet, dass** jede der Nasen (3) und jede der Aussparungen (4) des Teils (1) eine gleichschenklige Trapezform aufweist.

4. Teil nach einem der Ansprüche 1 bis 3, **dadurch gekennzeichnet, dass** die Breite der Nasen (3) in einem Breitenbereich liegt, der zwischen 100 % und 150 % der Breite der Aussparungen (4) definiert ist.

5. Teil nach einem der vorstehenden Ansprüche, **dadurch gekennzeichnet, dass** die Nasen (3) eine entlang einer Mittellinie (6A) des entsprechenden Trapezes (5A) definierte Länge aufweisen, die kleiner als oder gleich der Länge der Aussparungen (4) ist.

6. Teil nach einem der vorstehenden Ansprüche, **dadurch gekennzeichnet, dass** jede Seite (C1 bis C6) des Teils (1) mindestens zwei Verbindungselemente (3, 4) umfasst.

7. Teil nach Anspruch 6, **dadurch gekennzeichnet, dass** jede Seite (C1 bis C6) des Teils (1) gleiche Verbindungselemente umfasst.

8. Teil nach einem der vorstehenden Ansprüche, **dadurch gekennzeichnet, dass** es eine allgemein sechseckige Form aufweist.

9. Plattenkern, der eine Vielzahl von miteinander verbundenen Kernteilen umfasst, **dadurch gekennzeichnet, dass** die Kernteile derart sind wie das unter einem der Ansprüche 1 bis 8 spezifizierte Teil (1).

10. Satellitenantennenreflektor, der einen Kern und zwei auf beiden Seiten des Kerns angeordnete Deckschichten umfasst, **dadurch gekennzeichnet, dass** der Kern derart ist wie der Plattenkern (10), der unter Anspruch 9 spezifiziert ist.

11. Satellit, **dadurch gekennzeichnet, dass** er einen Antennenreflektor derart wie denjenigen umfasst, der unter Anspruch 10 spezifiziert ist.

12. Verfahren zur Herstellung eines Plattenkerns, insbesondere für einen Satellitenantennenreflektor, mithilfe von Kernteilen derart wie dem Teil (1), das unter einem der Ansprüche 1 bis 8 spezifiziert ist, wobei das Verfahren mindestens darin besteht:
a) eine Vielzahl von Kernteilen auszuführen; und
b) die Kernteile miteinander zu verbinden, sodass ein Strukturelement gebildet wird, welches den Plattenkern (10) darstellt, wobei das Verbinden darin besteht, benachbarte Kernteile im Bereich von zusammenwirkenden Seiten zusammenzufügen, **dadurch gekennzeichnet, dass** im Schritt b) für jedes Paar zusammenwirkender Seiten von zwei benachbarten Kernteilen die Gesamtheit der Nasen (3) der Seite eines der Teile in die Gesamtheit der Aussparungen (4) von komplementärer Form der zusammenwirkenden Seite des anderen der Teile eingefügt werden.

## Claims

1. Part intended for a panel core, in particular for a satellite antenna reflector, said part (1) being substantially plane and having a polygonal shape with cavities, the polygonal part (1) featuring at least one of the following assembly elements: at least one lug (3), at least one recess (4), **characterised in that** each side (C1 to C6) of the polygonal part (1) includes a least one of said assembly elements, **in that** each of said lugs (3) and each of said recesses (4) of the part (1) has a trapezoidal shape (5A, 5B), with in each case complementary shapes, the trapezium (5A) of each of said lugs (3) widening towards the outside of the part (1) and the trapezium (5B) of each of said recesses (4) widening towards the inside of the part (1), and **in that** each of said lugs (3) has a width defined transversely to a perpendicular bisector (6A) of the corresponding trapezium (5A), which is greater than the width of each of said recesses (4).

2. Part according to claim 1, **characterised in that** the different lugs (3) of the part (1) are identical, and **in that** the different recesses (4) of the part (1) are also identical.

3. Part according to any of claims 1 and 2, **characterised in that** each of said lugs (3) and each of said recesses (4) of the part (1) has the shape of an isosceles trapezium.

4. Part according to any of claims 1 to 3, **characterised in that** the width of said lugs (3) is included in a defined range of widths between 100% and 150% of the width of said recesses (4).

5. Part according to any of the preceding claims, **characterised in that** said lugs (3) have a length defined along a perpendicular bisector (6A) of the corresponding trapezium (5A), which is less than or equal to the length of said recesses (4).

6. Part according to any of the preceding claims, **characterised in that** each side (C1 to C6) of the part (1) features at least two assembly elements (3, 4).

7. Part according to claim 6, **characterised in that** each side (C1 to C6) of the part (1) features the same assembly elements.

8. Part according to any of the preceding claims, **characterised in that** it has a generally hexagonal shape.

9. Panel core comprising a plurality of core parts assembled together, **characterised in that** said core parts are like the part (1) specified in any of claims 1 to 8.

10. Satellite antenna reflector, comprising a core and two skins arranged either side of the core, **characterised in that** said core is like the panel core (10) specified in claim 9.

11. Satellite, **characterised in that** it features an antenna reflector like that specified in claim 10.

12. Method for manufacturing a panel core, in particular for a satellite antenna reflector, using core parts such as the part (1) specified in any of claims 1 to 8, said method consisting at least of:
a) producing a plurality of core parts; and
b) assembling said core parts together so as to form a structural element representing said panel core (10), the assembly involving connecting together adjacent parts of the core at interacting sides, **characterised in that** at step b), for each pair of interacting sides of two adjacent core parts, all the lugs (3) of the side of one of said parts is inserted into all the complementary recesses (4) of the interacting side of the other of said parts.
